# EUROPEAN PATENT APPLICATION

(11) **EP 1 858 258 A2**
(43) Date of publication of application: **21.11.2007**
(21) Application number: 07008790.3
(22) Date of filing: 30.04.2007
(51) Int. Cl.: H04N 5/60, H04N 5/445

(54) **Television receiver**

(30) Priority: 19.05.2006 JP 2006140053
(71) Applicant: Funai Electric Co., Ltd., Daito-shi, Osaka 574-0013 (JP)
(72) Inventor: Kurose, Takahiro, Osaka 574-0013 (JP)
(74) Representative: Grünecker, Kinkeldey, Stockmair & Schwanhäusser Anwaltssozietät

(57) **Abstract**

A television receiver (100) having an HDMI terminal (111a) and an RCA-type audio input terminal (111b) including: a signal-inputted terminal detecting unit (131) for detecting an audio input terminal to which the audio signal is inputted, when the input from the HDMI terminal is selected; and a signal-inputted terminal display control unit (131) for making a display unit (9) display information regarding to an audio input terminal (111) to which an audio signal is inputted, based on a detected result obtained by the signal-inputted terminal detecting unit (131).

## Description

### BACKGROUND OF THE INVENTION

### Field of the Invention

The present invention relates to a television receiver having an HDMI terminal.

### Description of the Related Art

In these years, television receivers which complies with the HDMI (High Definition Multimedia Interface) standard for enabling a digital transfer of a video signal and an audio signal by a single cable, have been becoming popular. In general, a television receiver adopting the HDMI standard is constructed so that a user can configure a desired audio input form and an audio output form.

Techniques for a television receiver which can deal with a plurality of audio input and output forms are disclosed in, for example, Patent Document 1 and Patent Document 2.

In Patent Document 1, for example, a signal selecting device is proposed, in which a plurality of signal input units complying with the HDMI standard are provided and a signal inputted through an HDMI terminal can be effectively selected by selecting (1) a signal inputted to a signal input unit in the case that the signal is inputted only to that signal input unit and (2) a signal inputted to a previously-designated signal input unit in the case that signals are inputted to a plurality of signal input units.

In Patent Document 2, for example, a display device is disclosed, which can prevent a user from inadvertently forgetting the connection of an audio cable, by displaying a message on the screen for prompting the user to connect an audio cable and by flashing LED's on and off.
[Patent Document 1] JP-2004-357029A
[Patent Document 2] JP-2005-250342A

On the other hand, in a television receiver having an HDMI terminal, there was a problem in that, even though the audio sound is not inputted in an audio input form that a user desired, due to his or her inappropriate configuration of the audio input terminal or inappropriate connection of the cables, the user cannot recognize that fact.

However, the technologies disclosed in Patent Documents 1 and 2 cannot resolve the above-mentioned problem, as they cannot make the user recognize, in the event that the audio sound is being outputted, that the audio input form is not correct and that the configuration thereof is not one that the user intended. Furthermore, the television receiver having the HDMI terminal, so far known, involves a problem in that it cannot make the user recognize which audio output terminal the audio sound is outputted from.

### SUMMARY OF THE INVENTION

An object of the invention is to provide a television receiver in which a user can surely know which audio input terminal an audio signal is inputted to.

In order to solve the problem, in accordance with a first aspect of the invention, the television receiver having an HDMI terminal and an RCA-type audio input terminal includes:
a configuration unit for configuring input and output of an audio signal when the input from the HDMI terminal is selected;
a signal-inputted terminal detecting unit for detecting an audio input terminal to which the audio signal is inputted, when the input from the HDMI terminal is selected;
a connected-device detecting unit for detecting a category of a connected-device connected to the television receiver, based on the signal inputted through the HDMI terminal;
a signal-inputted/outputted terminal display control unit for making a display unit display in an OSD manner, information regarding to an audio input terminal to which an audio signal is inputted and an audio output terminal from which an audio signal is outputted, based on a detected result obtained by the signal-inputted terminal detecting unit and configuration of the input and the output of the audio signal configured by the configuration unit; and
a connected-device display control unit for making the display unit display in an OSD manner, information regarding to a connected-device connected to the television receiver through the HDMI terminal, based on a detected result obtained by the connected-device detecting unit.

In accordance with the first aspect of the present invention, a television receiver having an HDMI terminal and an RCA-type audio input terminal includes: a configuration unit which configures input and output of an audio signal when the input from an HDMI terminal is selected; a signal-inputted terminal detecting unit which detects an audio input terminal to which the audio signal is inputted, when the input from the HDMI terminal is selected; and a connected-device detecting unit which detects the category of a connected-device connected to the television receiver, based on the signal inputted to through the HDMI terminal. The television receiver further includes: a signal-inputted/outputted terminal display control unit which displays information, that relates to a signal input terminal to which the audio signal is inputted and an audio output terminal from which the audio signal is outputted, on a display unit in an OSD manner, based on a detected result obtained by the signal-inputted terminal detecting unit and configuration of the input and the output of the audio signal configured by the configuration unit; and a connected-device display control unit which displays information, that relates to the connected-device connected to the television receiver through the HDMI terminal, on the display unit in an OSD manner, based on the detected result obtained by the connected-device detecting unit. Accordingly, a user can surely and easily recognize, by referring the information displayed on the display unit when he has selected the HDMI terminal in the television receiver, which audio input terminal the audio signal is inputted from, what configuration is made as to which audio output terminal the audio signal is to be outputted from, and the category of the connected-device connected to the television receiver.

In accordance with a second aspect of the invention, the television receiver having an HDMI terminal and an RCA-type audio input terminal includes:
a signal-inputted terminal detecting unit for detecting an audio input terminal to which the audio signal is inputted, when the input from the HDMI terminal is selected; and
a signal-inputted terminal display control unit for making a display unit display information regarding to an audio input terminal to which an audio signal is inputted, based on a detected result obtained by the signal-inputted terminal detecting unit.

In accordance with a second aspect of the present invention, a television receiver having an HDMI terminal and an RCA-type audio input terminal includes: a signal-inputted terminal detecting unit which detects an audio input terminal to which an audio signal inputted, when the input from the HDMI terminal is selected; and a signal-inputted terminal display control unit which displays information, that relates to an audio input terminal to which the audio signal is inputted, on a display unit, based on a detected result obtained by the signal-inputted terminal detecting unit. Accordingly, a user can surely and easily recognize, by referring the information displayed on the display unit when he has selected the HDMI terminal in the television receiver, which audio input terminal the audio signal is inputted from.

In the second aspect of the invention, preferably, the television receiver further includes:
a connected-device detecting unit for detecting a category of a connected-device connected to the television receiver, based on the signal inputted through the HDMI terminal; and
a connected-device display control unit for making the display unit display information regarding to a connected-device connected to the television receiver through the HDMI terminal, based on a detected result obtained by the connected-device detecting unit.

According to the television receiver having such a structure, the television receiver having an HDMI terminal and an RCA-type audio input terminal includes: a connected-device detecting unit which detects the category of the connected-device connected to the television receiver, based on the signal inputted to through the HDMI terminal; and a connected-device display control unit which displays information, that relates to the connected-device connected to the television receiver through the audio input terminal, on the display unit, based on the detected result obtained by the connected-device detecting unit. Accordingly, in addition to those advantages obtainable by the second aspect of the present invention, a user can surely and easily recognize, by referring the information displayed on the display unit, the category of the connected-device connected to the television receiver.

In the second aspect of the invention, preferably, the television receiver further includes:
a configuration unit for configuring output of an audio signal when the input from the HDMI terminal is selected; and
a signal-outputted terminal display control unit for making a display unit display information regarding to an audio output terminal from which an audio signal is outputted, based on configuration of the output of the audio signal configured by the configuration unit.

According to the television receiver having such a structure, the television receiver having an HDMI terminal and an RCA-type audio input terminal includes: a configuration unit which configures output of an audio signal when the input from the HDMI terminal is selected; and a signal-outputted terminal display control unit which displays information, that relates to an audio output terminal from which the audio signal is outputted, on a display unit, based on the configuration of the output of the audio signal configured by the configuration unit. Accordingly, in addition to those advantages obtainable by the second and the third aspects of the present invention, a user can surely and easily recognize, by referring the information displayed on the display unit, what configuration is made as to which audio output terminal the audio signal is to be outputted from.

### BRIEF DESCRIPTION OF THE DRAWINGS

The present invention will become more fully understood from the detailed description given hereinafter and the accompanying drawings which are given by way of illustration only, and thus are not intended as a definition of the limits of the scope of the invention, and wherein:
FIG. 1 shows a front view of an embodiment of a television receiver according to the present invention;
FIG. 2 shows a back view of the embodiment of the television receiver according to the present invention;
FIG. 3 is a block diagram showing the main structure of the embodiment of the television receiver according to the present invention;
FIGS. 4A and 4B are views showing an embodiment of connection terminals provided to an input/output interface which is disposed at the rear portion of a receiver main body;
FIGS. 5A to 5F are views showing embodiments of OSD (On-Screen Display) representations displayed on a display unit when a control program for displaying signal-inputted/outputted terminals is executed;
FIGS. 6A to 6H are views showing embodiments of OSD representations displayed on the display unit when a control program for displaying connected-devices is executed;
FIG. 7 is a view showing an embodiment of an audio input/output configuration picture image displayed on the display unit when a configuration program is executed;
FIG 8 is a view showing an embodiment of an OSD representation displayed on the display unit by the execution of a detecting program for detecting a signal-inputted terminal, a detecting program for detecting a connected-device, the control program for displaying signal-inputted/outputted terminals, and the control program for displaying a connected-device;
FIG 9 is a view showing another embodiment of an OSD representation displayed on the display unit by the execution of the detecting program for detecting a signal-inputted terminal, the detecting program for detecting a connected-device, the control program for displaying signal-inputted/outputted terminals, and the control program for displaying a connected-device; and
FIGS. 10A and 10B are a flowchart showing processes, by a CPU, for controlling detection of an audio-inputted terminal and a connected-device and display of the audio-inputted terminal and the connected-device.

### DETAILED DESCRIPTION OF THE PREFERRED EMBODIMENTS

A preferred embodiment according to the invention will be explained in detail hereinafter with reference to the drawings attached herewith.

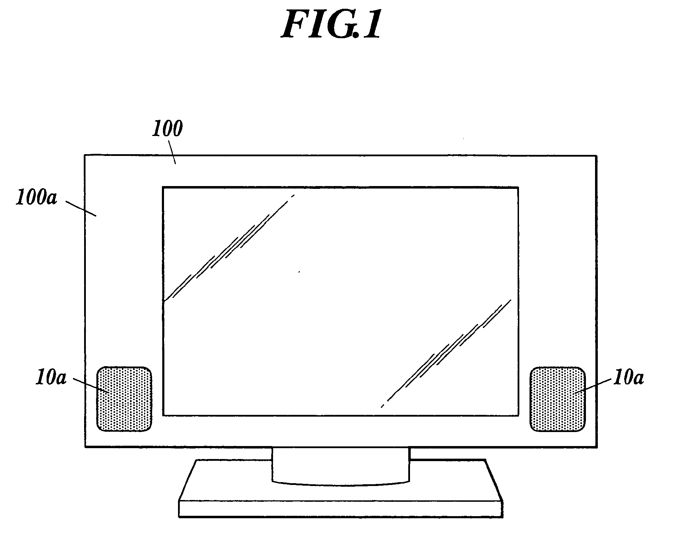

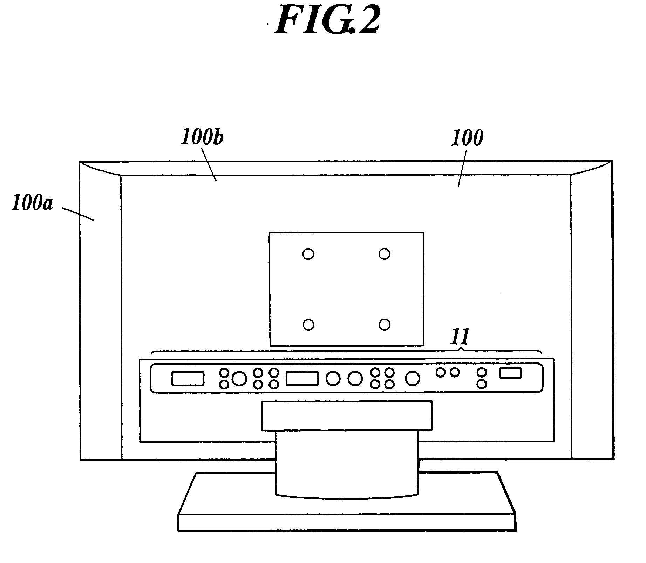

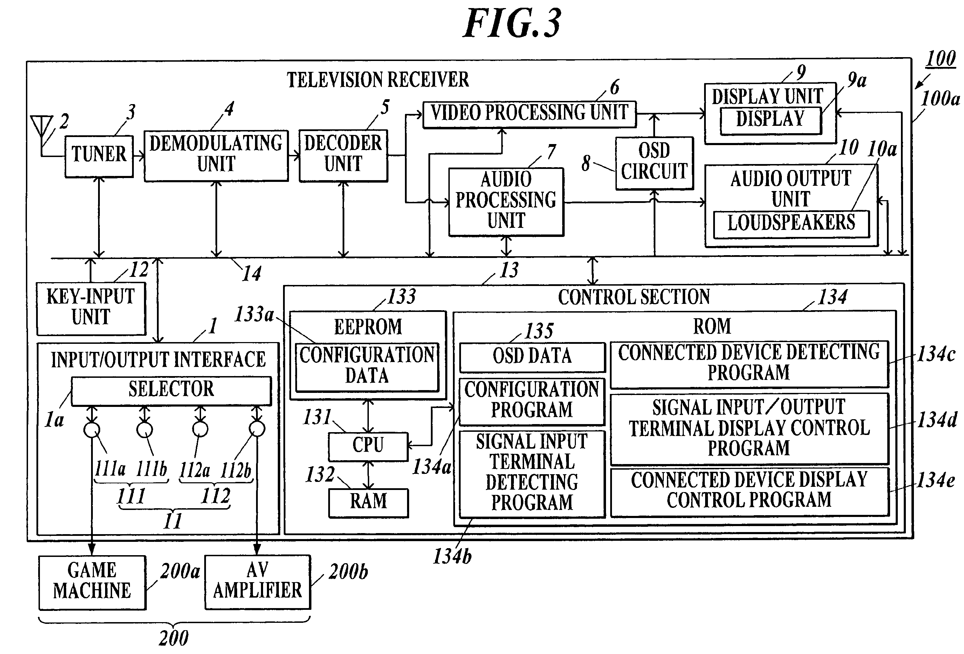

FIG. 1 is a front view of an embodiment of a television receiver 100 according to the invention, and FIG. 2 is a rear view of the television receiver 100. FIG. 3 is a block diagram showing the main structure of the television receiver 100 embodying the invention.

As shown in FIGS. 1 to 3, the television receiver 100 embodying the invention provides a plurality of connecting terminals 11 at the rear portion 100b of the main body 100a, through which various devices 200 such as AV (Audio and Video) devices are connected (hereinafter referred to as "connected-devices"). The television receiver 100 will output, to a display 9a and loudspeakers 10a, audio sounds and video images based on audio and video signals which are inputted from the connected-devices through either one of the connecting terminal 111 among a plurality of the connecting terminals 11, and further output, to the connected-devices 200 which are connected to the television receiver 100 through either one of the connecting terminals 11, audio sounds and video images inputted through the connecting terminal 11 or audio and video signals received by an antenna 2 or the like.

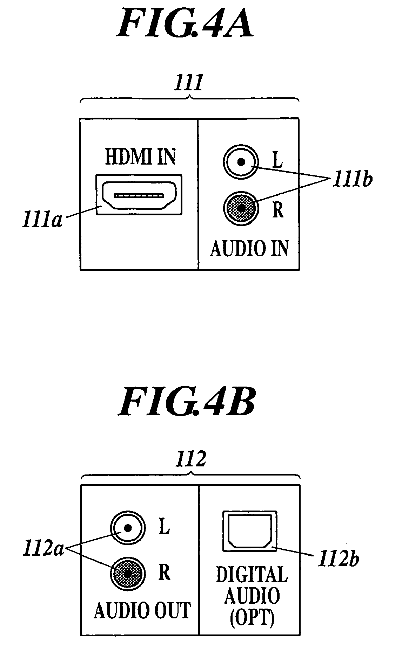

FIG. 4 is a view exemplifying connection terminals 11 provided to an input/output interface 1, which is disposed at the rear portion 100b of the receiver main body 100a.

The receiver main body 100a provides, for example, audio input terminals 111 to which audio signals are inputted, audio output terminals 112 from which audio signals are outputted, video input terminals to which video signals are inputted, and video output terminals from which video signals are outputted.

Here, the following explanation will be made assuming that the television receiver 100 provides, as shown in FIG. 4, such as an HDMI terminal 111a (digital input) as a video and audio input terminal 111, RCA-type audio input terminals (analog input) 111b as an audio input terminal 111, and RCA-type audio output terminals (analog output) 112a and an optical digital audio output terminal (digital output) 112b as an audio output terminal 112.

As the signal input form when utilizing an HDMI terminal 111a, there are two signal input forms in which one form is that a video signal and an audio signal are inputted from a connected-device 200 connected to the HDMI terminal 111a, and other form is that only a video signal is inputted from the connected-device 200 connected to the HDMI terminal 111a and an audio signal is inputted from other audio input terminals such as RCA-type audio input terminals. The television receiver 100 embodying the present invention, can make a user recognize which audio input terminal 111 the audio signal is inputted from, as an OSD (On-Screen Display) representation notifying the user which audio input terminal the audio signal is inputted from.

The structure of the television receiver 100 embodying the present invention will be explained hereinafter.

As shown in FIG. 3, the television receiver 100 comprises, in its main body 100a, an input/output interface 1, an antenna 2 for receiving television broadcasting signals, a tuner 3 for selecting an audio/video signal of a predetermined frequency inputted from the antenna 2, a demodulating portion 4 for demodulating the audio/video signal selected by the tuner 3, a decoder portion 5 for decoding the audio/video signal, a video processing portion 6 for processing the video signal in a prescribed manner, an audio processing portion 7 for processing the audio signal in a prescribed manner, an OSD circuit 8 for adding OSD data 135 (will be explained later) to the video signal outputted from the video processing portion 6, a display unit 9 for displaying video images based on the video signals outputted from the video processing portion 6, an audio output portion 10 for outputting an audio sound based on the audio signal outputted from the audio processing portion 7, a key input unit 12 which is operated by a user for key inputting, a control portion 13 for totally controlling the operation of the television receiver 100, and the like; and all of these components are connected to each other through a bus line 14.

The input/output interface 1 comprises, for example, a plurality of connecting terminals 11, a selector 1a for performing changeover operation, based on a control signal which is inputted from the control portion 13 for the changeover of the input, to selectively connect one of the connecting terminal 11, among other connecting terminal 11, for receiving audio signals and/or video signals from the connected-device 200 connected to the selected connecting terminal 11.

Specifically, by user's remote control operation, when an input operation signal for giving instructions to the selector 1a is outputted to the CPU 131 through the control portion 13, to change over the audio sound and the video image to those outputted from one of the connected-devices, a control signal is outputted to the selector 1a for changing over the connecting terminals 11 to one to which the one of the connected-device is connected. In this manner, the selector 1a changes over the connection to the one of the connecting terminals 11 in response to the control signal.

The connected-devices to be connected to the television receiver are, as shown in FIG. 4, for example, a game machine 200a connected through the HDMI terminal 111a, an AV amplifier 200b connected through an optical digital audio output terminal 112b, and the like.

The antenna 2 is disposed toward in a given direction in the outdoors, and receives audio and video signals contained in RF broadcasting signals transmitted from television broadcasting stations (not shown).

The tuner 3 comprises, for example, an RF amplifying circuit, and a frequency conversion circuit consisting of a local oscillation circuit and a mixing circuit, though all those components are omitted in the drawing. The tuner 3 amplifies, by the RF amplifying circuit, the television broadcasting signal containing audio/video signals that is inputted from the antenna 3, mixes it with a local oscillation signal outputted from the local oscillation circuit in the mixing circuit, and further receives an intermediate frequency signal (an IF signal) in a specific frequency band in response to an control signal from the control portion 13 for tuning in on a specific broadcasting signal, and, after having processed the intermediate frequency signal in a predetermined manner, outputs it to the demodulating portion 5.

The demodulating portion 4 performs, for example, an OFDM (Orthogonal Frequency Division Multiplexing) demodulation and error correction, produces a transport stream (TS) and outputs it to the decoder portion 5.

The decoder portion 5 comprises, for example, a TS decoder, a video decoder, an audio decoder (all those are not shown in the drawing), and separates a video stream and an audio stream under the MPEG 2 (Moving Picture Experts Group 2) standard, and PSI/SI (Program Specific Information/Service Information) from the transport stream, and supplies the video stream to a video decoder, the audio stream to an audio decoder, and data contained in the PSI/SI to the control portion 13.

The video decoder decodes the video stream inputted from the TS decoder and produces video image data by performing inverse Discrete Cosine Transform (iDCT) and motion compensation, and outputs the data to the video-processing portion 6. The audio decoder decodes the audio stream inputted from the TS decoder, produces audio data, and outputs it to the audio processing portion 7.

The video-processing portion 6 performs various processes such as D/A conversion for the video data inputted from the video recorder or the input/output interface 1, and produces a video signal in a prescribed form. The audio processing portion 7 performs various processes such as D/A conversion for the audio data inputted from the audio decoder or the input/output interface 1, and produces an audio signal in a predetermined form.

The OSD circuit 8, in response to the instruction output from the control portion 13, performs a process for combining the OSD data 135 stored in a ROM 134 with the video signal outputted from the video processing portion 6.

The display unit 9 comprises the display 9a consisting of, for example, such as an LCD (Liquid Crystal Display), a PDP (Plasma Display Panel), and displays on it video images based on the video signals inputted from the video processing portion 6.

The audio output portion 10 comprises, for example, such as the loud speakers 10a, and outputs from the loudspeaker 10a the audio sound based on the audio signals inputted from the audio processing portion 7.

The key input unit 12 is, for example, a remote controller having a plurality of keys and when a key is depressed an input operation signal that corresponds to the depressed key is outputted to the control portion 13.

The control portion 13 comprises such as a CPU (Central Processing Unit) 131, a RAM (Random Access Memory) 132, an EEPROM (Electronically Erasable and Programmable Read Only Memory) 133, and ROM (Read Only Memory) 134.

The CPU 131 executes a various programs stored in the ROM 134 in response to the input signals inputted from the each part of the television receiver 100 through the bus line 14, and totally controls the overall operation of the television 100 by outputting control signals, based on the execution of the various programs, to the respective parts through the bus line 14.

The RAM 132 is, for example, a semiconductor memory of a volatile type, which temporarily stores processed results produced when the programs are executed and inputted data, and functions as a work area of the CPU 131.

EEPROM 133 is, for example, a re-writable semiconductor memory, and stores configuration data 133a of the audio input/output form which is configured by the user when a configuration program 134a (will be explained later) is executed by the CPU 131. Default data (omitted from the drawing) of the audio input/output forms, for example, can be stored in other areas of the EEPROM 133.

The ROM 134 is, for example, a semiconductor memory of a non-volatile type, and memorizes data relating to the process of the various programs and each control program.

Specifically, the ROM 134 stores control programs such as the configuration program 134a, the signal-inputted terminal detecting program 134b, the connected-device detecting program 134c, the signal-inputted/outputted terminal display control program 134d, the connected-device display control program 134e, and the OSD data 135.

The configuration program 134 is a program for accomplishing, for the CPU 131, a function to configure the input and the output of audio signals when the input from the HDMI terminal 111a is selected.

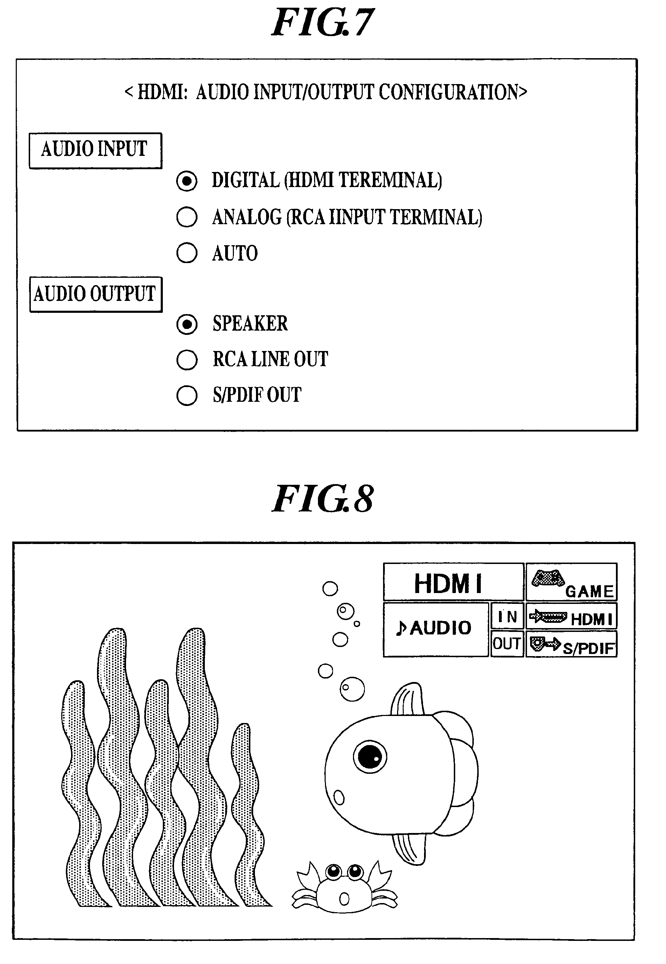

Specifically, when an input operation signal that requires the configuration of the input and the output of the audio signal is inputted to the control portion 13, by user's key operation for the key input unit 12, such as a remote controller, the CPU 131 executes the configuration program 134a and allows the display unit 9 to display the audio input/output configuration picture image for configuring the audio input and output when the input from the HDMI terminal 111a is selected. Through the audio input/output configuration picture image, for example and as shown in FIG. 7, the input form and the output form of the audio signal can be selected from among a plurality of options. When desired audio input and output forms are selected by user's key operation for the key input unit 12, the configuration data 133a in the selected audio input/output form are stored in the EEPROM 133.

More specifically, in the case that "Digital" in the audio input/output configuration picture image is configured as the audio input by the user and, hence, changing over to the connected device 200 connected through the HDMI terminal 111a is required, the CPU 131 receives the audio signal and the video signal from the HDMI terminal 111a. In the case that "Analog" in the audio input/output configuration picture image is configured as the audio input by the user and changing over to the connected device 200 connected through the HDMI terminal 111a is required, the CPU 131 will receive the video signal from the HDMI terminal 111a and the audio signal from the RCA-type audio input terminal 111b. Further, in the case that "Auto" in the audio input/output configuration picture image is configured as the audio input by the user and changing over to the connected device 200 connected through the HDMI terminal 111a is required, the CPU 131 determines whether a PCM (Pulse Code Modulation) signal can be received by executing a PCM signal detecting process, and receive the video signal and the audio signal from the HDMI terminal 111a in the case that the PCM signal can be received.

Furthermore, in the case that "S/PDIF OUT" in the audio input/output configuration picture image is configured as the audio output by the user and changing over to the connected device 200 connected through the HDMI terminal 111a is required, the CPU 131 outputs the audio signal from the optical digital audio output terminal 112b, and in the case that "RCA Line Out" is configured, the CPU 131 outputs the audio signal from the RCA-type audio output terminal 112a. Further, in the case that "Speaker" is configured, the CPU 131 outputs the audio signal preferentially from the loudspeakers 10a. Accordingly, the CPU 131 functions as a configuration unit by executing the configuration program 134a.

The signal-inputted terminal detecting program 134b is, for example, a program for the CPU 131 to accomplish a function for detecting the audio input terminal 111 to which the audio signal is inputted in the case that the input from the HDMI terminal 111a has been selected.

Specifically, when, by user's key operation for the key input unit 12, such as a remote controller, an input operation signal that requires the changeover of the input for the connected-device 200 connected to the television receiver 100 through the HDMI terminal 111a, is inputted to the control portion 13, the CPU 131 receives the signal inputted from the connected-device 200 connected to the HDMI terminal 111a through the input/output interface 1. Then, the CPU 131, by the execution of the signal-inputted terminal detecting program 134b, detects the audio input terminal 111 to which the audio signal is inputted. The CPU 131 determines, for example, that the audio input terminal 111 to which the audio signal is inputted is the HDMI terminal 111b, in the case that the audio signal inputted from the input/output interface 1 is a PCM signal and the sampling frequency thereof is either one of 32 KHz, 44.1 KHz or 48 KHz, and that the audio input terminal 111 to which the audio signal is inputted is the RCA-type audio input terminal 111b in the case that the audio signal inputted from the input/output interface 1 is not a PCM signal. Furthermore, the CPU 131 determines that audio outputting is unable in the case that the audio signal inputted from the input/output interface 1 is a PCM signal but the sampling frequency is not either one of 32 KHz, 44.1 KHz or 48 KHz. Accordingly, the CPU functions as an inputted/outputted signal detecting program by executing the signal-inputted/outputted terminal detecting program.

The connected-device detecting program 134c is, for example, a program for making the CPU 131 achieve a function for detecting categories of the connected-devices 200 connected to the television receiver 200, based on the signal inputted through the HDMI terminal 111a.

Specifically, by user's key operation for the key input unit 12, such as a remote controller, when the input operation signal which requires the changeover of the input to the connected-device 200 connected to the television receiver 100 through the HDMI terminal 111a is inputted to the control portion 13 and the input signal from the HDMI terminal 111a is changed over, through the changeover process, to reception, the CPU extracts, in the decoder portion 5, an identification signal for identifying the connected-device 200 from the signal inputted from the HDMI terminal 111a, and outputs the extracted signal to the control portion 13. The identification signal is, for example, information such as AVI (Auxiliary Video Information), and the CPU 131 identifies the category of the connected-devices 200 based on the identification signal. Accordingly, the CPU 131 functions as a connected-device detecting unit by executing the connected-device detecting program 134c.

The signal inputted/outputted terminal display control program 134d is, for example, a program for making the CPU 131 achieve a function for displaying on the display unit 9, i.e. in an OSD manner, the information relating to the audio input terminal 111 to which the audio signal is inputted and to the audio output terminal 112 from which the audio signal is outputted, based on the detected result obtained by the execution of the signal-inputted terminal detecting program 134b and on the configuration of the input and the output configured by the execution of the configuration program 134a.

Specifically, by user's key operation for the key input unit 12, such as a remote controller, when the input operation signal which requires the changeover of the input to the connected-device 200 connected to the television receiver 100 through the HDMI terminal 111a is inputted to the control portion 13, the CPU 131 refers to both the audio input terminal 111 for the audio signal configured by the execution of the configuration program 134a and the audio input terminal 111, to which the audio signal is inputted and which has been detected by the execution of the signal-inputted terminal detecting program 134b. In the case that the audio signal is inputted to the input terminal 111 which is configured in the configuration data 133a as the audio input terminal 111, the CPU 131 reads out the OSD data 135, from the ROM 134, for notifying the user that the audio signal is inputted from the audio input terminal 111, combines the OSD signal with a video signal in the OSD circuit 8, and displays it on the display unit 9 in the OSD manner.

The CPU 131 achieves the PCM-signal detecting process in the case that the configuration of the audio input terminal 111 by the user is made to "Auto", reads out the OSD data 135 from the ROM 134 for notifying the user the audio input terminal 111 which is determined, in accordance with the detecting result, as the audio input terminal 111 to which the audio signal is inputted, combines the OSD data with a video signal in the OSD circuit 8, and displays it on the display unit 9 in an OSD manner.

Further, by user's key operation for the key input unit 12, such as a remote controller, when the input operation signal which requires the changeover of the input to the connected-device 200 connected to the television receiver 100 through the HDMI terminal 111a is inputted to the control portion 13, the CPU 131 reads out, from the configuration data 133a, the audio output terminal 112 which is configured by the execution of the configuration program 134a, and further reads out the OSD data from the ROM 134 for notifying the user that the audio output terminal 112 is configured as the audio output terminal 112 from which the audio signal is outputted. The CPU 131, by combining the OSD data with a video signal in the OSD circuit 8, then displays it on the display unit 9 in an OSD manner.

Accordingly, the CPU 131 functions as a signal-inputted/outputted terminal display control unit by executing the signal-inputted/outputted terminal display control program 134d.

The connected-device display control program 134c is, for example, a program for making the CPU 131 achieve a function for displaying on the disply unit 9, i.e. in an OSD manner, the information relating to a connected-device 200 connected to the television receiver 100 through the HDMI terminal 111a, based on a detecting result obtained by the execution of the connected-device detecting program 134c.

Specifically, when the CPU 131 detects, by the execution of the connected-device detecting program 134c, a connected-device 200 connected to the television receiver 100 through the HDMI terminal 111a, the CPU 131 reads out the OSD data 135, from the ROM 134, for notifying the user that the said connected-device 200 is connected, combines the OSD data with a video signal in the OSD circuit 8, and displays it on the display unit 9 in an OSD manner.

Accordingly, the CPU 131 functions as a connected-device display control unit by executing the connected-device display control program 134c.

The OSD data 135 is a data which is read out from the ROM 134 by the CPU 131 upon the execution of the signal inputted/outputted terminal display control program 134d and the connected device display control program 134e, and combined with a video signal at the OSD circuit 8.

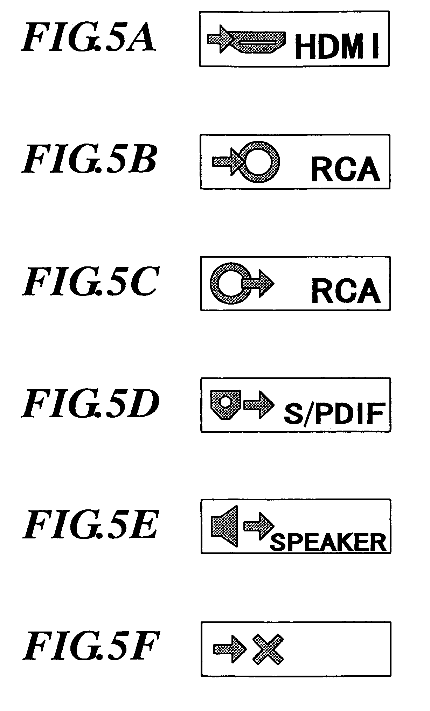

FIG. 5 shows examples of the OSD representations in the execution of the signal inputted/outputted terminal display control program 134d.

In the execution of the signal-inputted/outputted terminal display control program 134d, the CPU 131 displays the OSD representation as shown, for example, in FIG. 5A in an OSD manner, based on the OSD data stored in the ROM 134, in the case that the signal input terminal 111 to which the audio signal is inputted is the HDMI terminal 111a, and the OSD representation shown in FIG. 5B in the case that the audio input terminal 111 is the RCA-type audio input terminal 111b. The CPU 131 displays, in an OSD manner, the OSD representation as shown, for example, in FIG. 5C in the case that the audio output terminal 112 from which the audio signal is outputted is the RCA-type audio output terminal 112a, based on the OSD data 135 stored in the ROM 134; the OSD representation as shown in FIG. 5D in the case that the audio output terminal 112 from which the audio signal is outputted is the optical digital audio output terminal 112b; and the OSD representation as shown in FIG. 5E in the case that the audio signal is being outputted from the loudspeakers 10a. Further, the CPU displays, in an OSD manner, the OSD representation shown in FIG. 5F in the case that the audio sound cannot be outputted.

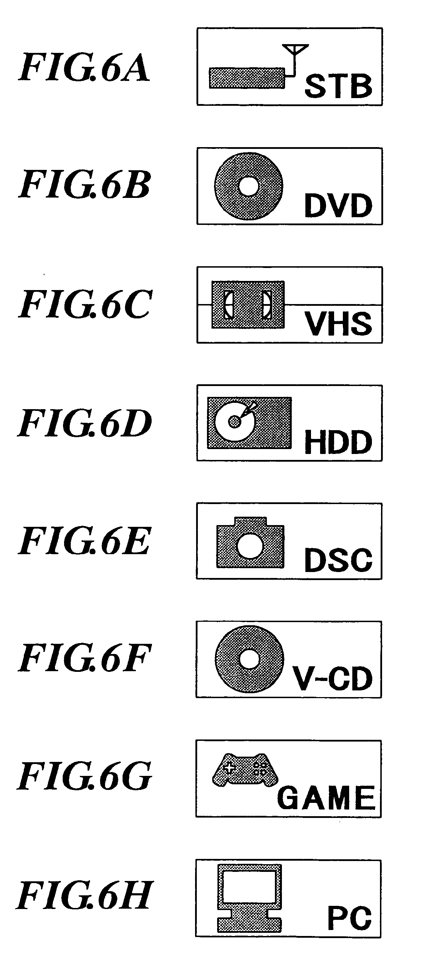

FIG. 6 shows the examples of the OSD representations in the execution of the connected-device display control program 134e.

In the execution of the connected-device display control program 134e, the CPU 131 displays, based on the OSD data 135 stored in the ROM 134, for example, the OSD representation shown in FIG. 6A in the case that the connected device 200 connected to the television receiver 100 through the HDMI terminal is an STB (Set Top Box); the OSD representation shown in FIG. 6B in the case that the connected device 200 is a DVD (Digital Versatile Disc) player; the OSD representation shown in FIG. 6C in the case that the connected device 200 is a D-VHS (Data Video Home System); and the OSD representation shown in FIG. 6D in the case that the connected device 200 is a HDD (Hard Disc Drive) video recorder. Further, the CPU 131 displays the OSD representation shown in FIG. 6E in the case that the connected device 200 is a DCC (Digital Still Camera); the OSD representation shown in FIG. 6F in the case that the connected device 200 is a video CD (Compact Disc); the OSD representation shown in FIG. 6G in the case that the connected device 200 is a game machine 200a; and the OSD representation shown in FIG. 6H in the case that the connected device 200 is a personal computer.

The processes performed by the CPU 131 in connection with the execution of the signal-inputted terminal detecting program 134b, the connected-device detecting program 134c, the signal-inputted/outputted terminal display control program 134d, and the connected-device display control program 134e will be specifically explained hereinafter.

When a changeover key (not shown) is depressed by user's operation of the key input unit 12, such as a remote controller, and the input operation signal requiring switchover of the input to the connected device 200 connected to the television receiver 100 through the HDMI terminal 111a is inputted to the control portion 13, the CPU 131 receives the signal inputted, through the input/output interface 1, from the connected device 200 connected to the HDMI terminal 111a. The CPU then performs the detecting process for detecting the signal input terminal 111 to which the audio signal is being inputted, outputs the detected result to the control portion 13, and refers to the configuration data 133a stored in the ROM 134 by the execution of the configuration program 134a. In the case that the audio input terminal 111 (e.g. the HDMI terminal 111a) configured in the configuration data 133a as the audio input terminal to which the audio signal is inputted is the audio input terminal 111 that has been detected, by the execution of the signal-inputted terminal detecting program 134b, as the audio input terminal to which the audio signal is inputted, the CPU 131 makes the loudspeaker 10a output the audio sound based on the audio signal outputted from the connected device connected to the HDMI terminal 111a, and, at the same time, reads out the OSD data 135 (refer to FIG. 5A) from the ROM 134 for notifying the user that the audio signal is inputted from the said audio input terminal 111 (e.g. the HDMI terminal 111a), and combines the OSD data with a video signal in the OSD circuit 8.

Further, when the changeover key (not shown) is depressed by user's operation for the key input unit 12 such as a remote controller, and the input operation signal requiring changeover of the input to the connected-device 200 connected to the television receiver 100 through the HDMI terminal 111a is inputted to the control portion 13, the CPU 131 reads out, from the configuration data 133a, the audio output terminal 112 (i.e. the optical digital audio output terminal 112b) configured by the execution of the configuration program 134a. In the case that the said audio output terminal 112 is configured as the audio signal output terminal 112, the CPU 131 further reads out, from the ROM 134, the OSD data 135 (refer to FIG. 5D) for informing the user that the said audio input terminal 112 is configured as the audio output terminal 112 from which the audio signal is outputted, and combines the OSD data 135 with a video signal in the OSD circuit 8. Furthermore, when the switchover key (not shown) is depressed by user's operation of the key input unit 12 such as a remote controller, the input operation signal requiring switchover of the input to the connected device 200 connected to the television receiver 100 through the HDMI terminal 111a is inputted to the control portion 13, and the process for changing over the reception of the input to the HDMI terminal 111a has been performed, the CPU 131 will extract, in the decoder portion 5, the identification signal for identifying the connected-device 200, and output the extracted identification signal to the control portion 13. When the category of the connected-device 200 (e.g. the game machine 200) connected to the television receiver 100 through the HDMI terminal 111a is identified based on the extracted identification signal, the CPU 131 reads out, from the ROM 134, the OSD data 135 (refer to FIG. 6G) for informing the user that the said connected-device 200 is connected, and combines the OSD data with a video signal in the OSD circuit 8.

As the result of all the above-mentioned processes having been performed, the OSD representations, as shown in FIG. 8, that is, the audio input terminal 111 (e.g. HDMI terminal 111a) to which the audio signal is inputted, the audio output terminal 112 (e.g. the optical digital audio output terminal 112b) which has been configured as the output terminal of the audio signal, the category of the connected-device 200 connected to the television receiver 100 through the HDMI terminal) that the user can respectively recognize are displayed on the display unit 9 in an OSD manner.

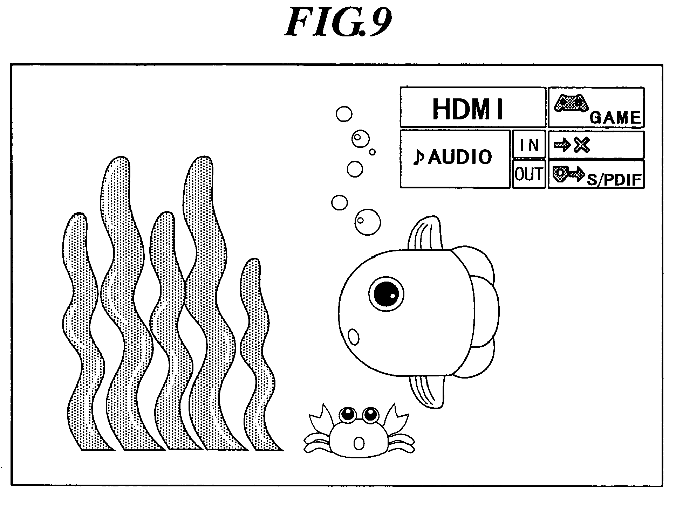

In the case that the audio input terminal 111 (e.g. the RCA-type audio input terminal 111b) which has been configured in the configuration data as the audio input terminal 111 for inputting the audio signal is not the audio input terminal 111 (e.g. HDMI terminal 111a), to which the audio signal is inputted, detected by the execution of the signal-inputted terminal detecting program 134b, or in the case that the sampling frequency of the PCM signal inputted from the HDMI terminal 111a is not either of 32 kHz, 44.1 kHz, or 48 kHz, the CPU 131 reads out, from the ROM 134, the OSD data that indicates that audio outputting is unable, and combines the OSD data with a video signal in the OSD circuit 8. As a result, the OSD representations, as shown in FIG. 9, that the user can recognize that the audio output is unable are displayed on the screen unit 9 in an OSD manner.

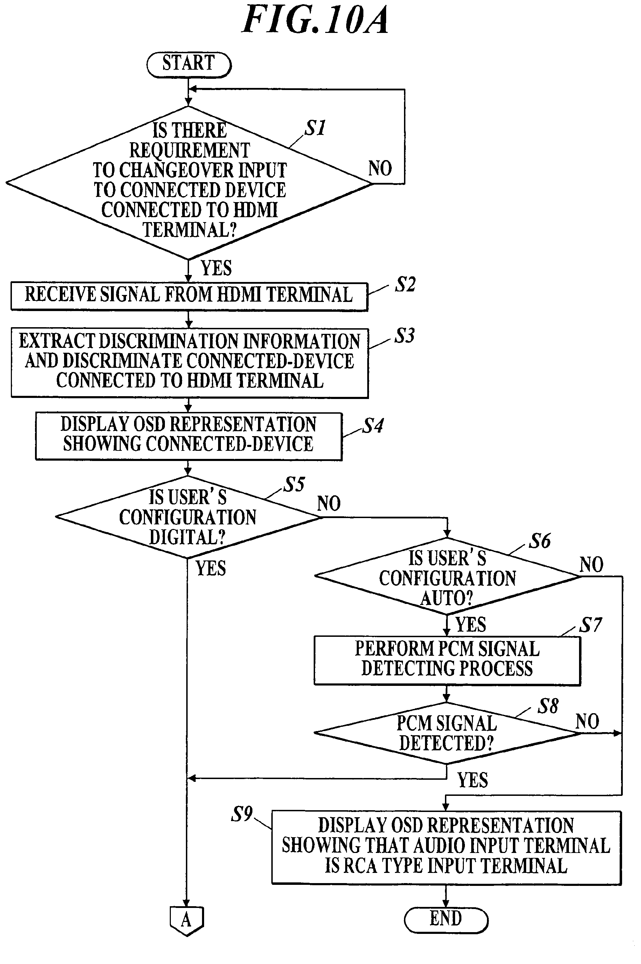

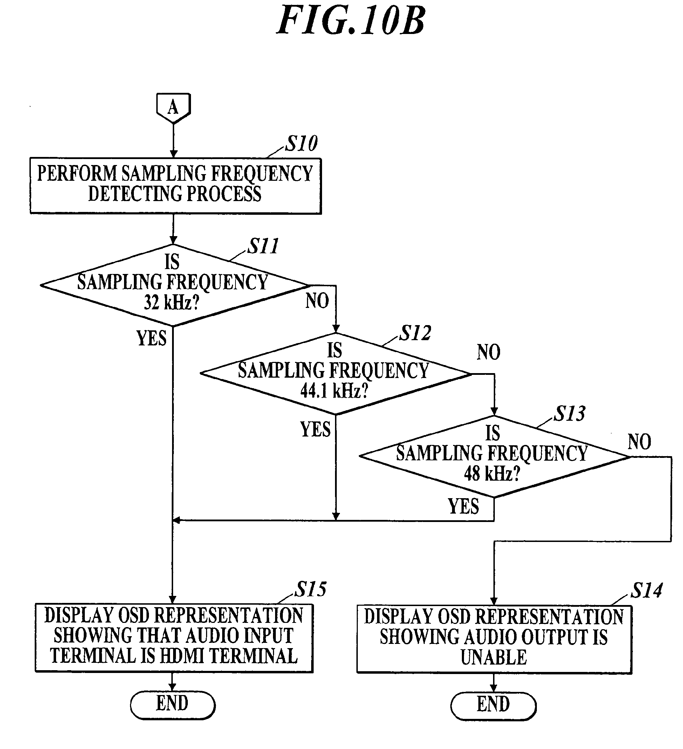

The audio-inputted terminal/connected-device detection processes and the display control process performed by the CPU 131 will be now explained, referring to FIG. 10.

All these processes are performed by the CPU 131 executing the signal-inputted terminal detecting program 134b, the connected-device detecting program 134e, the signal input/output terminal display control program 134d, and the connected-device display control program 134e.

First, the CPU 131 determines, in a step S1, whether the input operation signal that requires changeover of the input to the connected device 200 connected to the HDMI terminal 111a is inputted by user's key operation for the key input unit 12. If the CPU 131 determines, in the step S1, that the changeover of the input to the connected device 200 is required (the step 1; Yes), then the CPU 131 changes over, in a step 2, by outputting the control signal to a selector 1a of the input/output interface 1, the input for reception of the signal inputted from the connected device 200 connected to the HDMI terminal 111a in a step 2. The CPU 131 then extracts the identification signal from the signal inputted from the the connected-device 200 connected to the HDMI terminal 111a, and determines the category of the connected-device 200 connected to the HDMI terminal 111a based on the extracted identification signal (a step S3). The CPU 131 then, in a step S4, reads out the OSD data 135 indicating the connected-device connected to the HDMI terminal 111a from the ROM 134 based on the determined result in the step S3, and displays, by combining the OSD data 135 with the video signal in the OSD circuit 8, an OSD representation by which the user can recognize the connected-device 111a connected to the HDMI terminal.

The CPU further reads out, in a step S5, the audio input form configured by the user based on the configuration data 133a stored in the EEPROM 133, and determines whether user's configuration is "Digital". If the CPU 131 determines that user's configuration for the audio input form is "Digital" (the step S5; Yes), the process proceeds on to a step S10. On the other hand, if the CPU 131 determines that user's configuration for the audio input form is not "Digital" (the step S5; No), the CPU determines in a step S6 whether user's configuration for the audio input form is "Auto". If the CPU determines that user's configuration for the audio input form is not "Auto" in the step 6 (the step S6; No), the process proceed on to a step S9, and if the CPU determines that user's configuration for the audio input form is "Auto" (the step S6; Yes), the CPU 131 performs the PCM signal detecting process in a step S7. The CPU then determines in a step S8 if the PCM signal has been detected by the PCM signal detecting process. If the CPU 131 determines that the PCM signal has not been detected in the step S8 (the step S8; No), the process proceeds on to a step S9. On the other hand, if the PCM signal has been detected in the step S8 (the step S8; Yes), the process proceeds on to a step S10. In the step S9, the CPU 131 displays, by combining the OSD data 135 read out from the ROM 134 with the video signal in the OSD circuit 8, an OSD representation that notifies the user that the audio input terminal to which the audio signal is inputted is the RCA-type audio input terminal 111b, and terminates the process.

The CPU 131 performs, in the step S10, a sampling-frequency detecting process for the audio signal inputted from the HDMI terminal 111a. The CPU then determines whether the sampling frequency detected by the sampling-frequency detecting process in the step S10 is 32 kHz. If the CPU determines in a step S11 that the sampling frequency is 32 kHz (the step S11; Yes), the process proceeds on to a step S15, and, on the other hand, if the CPU determines that the sampling frequency is not 32 kHz (the step S11; No), it then determines whether the sampling frequency is 44.1 kHz. If the CPU determines in a step S12 that the sampling frequency is 44.1 kHz (the step S12; Yes), the process proceeds on to the step S15, and, on the other hand, if the CPU determines that the sampling frequency is not 44.1 kHz (the step S12; No), it then determines whether the sampling frequency is 48 kHz. If the CPU determines in a step S13 that the sampling frequency is 48 kHz (the step S13; Yes), the process proceeds on to the step S15, and, on the other hand, if the CPU determines that the sampling frequency is not 48 kHz (the step S13; No), the CPU 131 displays, in a step S14, an OSD representation on the screen 9 for notifying the user that the audio sound can not be outputted, and terminates the process.

On the other hand, the CPU 131, in the step S14, displays an OSD representation for notifying the user that the audio input terminal to which the audio signal is inputted is the HDMI terminal 111a, by combining the OSD data 135 read out from the ROM 134 with the video signal in the OSD circuit 8, and terminates the process.

According to the television receiver 100 embodying the present invention, as explained hereinbefore, through the execution of the configuration program 134a by the CPU 131, the audio input and output are configured when the input from the HDMI terminal 111a has been selected; through the execution of the signal-inputted terminal detecting program 134b by the CPU 131, the audio input terminal 111 to which audio signals are inputted is detected when the input from the HDMI terminal is selected; and through the execution of the connected-device detecting program 134c by the CPU 131, the category of the connected-device 200 connected to the television receiver 100 is detected, based on the signal inputted through the HDMI terminal 111a. Further, through the execution of the signal-inputted/outputted terminal display control program by the CPU 131 and based on the detection result by the execution of the signal-inputted terminal detecting program 134b and on the configuration of input and output of the audio signal configured by the execution of the configuration program 134a, the information relating to the audio input terminal 111 to which the audio signal is inputted and the audio output terminal 112 from which the audio signal is outputted is displayed on the display unit in an OSD manner.

Accordingly, the user can surely recognize, by referring the information displayed on the display unit 9 when he has selected the HDMI terminal 111a in the television receiver 100, which audio input terminal 111 the audio signal is inputted from, what configuration is made as to which audio output terminal 111 the audio signal is to be outputted from, and the category of the connected-device 200 connected to the television receiver 100.

The present invention is not limited to the preferred embodiment shown and explained hereinbefore and various modifications or changes of design can be made to the extent that they do not depart from the spirit of the invention.

For example, the connected-device 200 connected to the television receiver 100 is not limited to the device explained in connection with the preferred embodiment, and may be a DVD (Digital Versatile Disc) player/recorder, a PC (Personal Computer), and so on.

The connecting terminals provided to the television receiver 100 are not limited to those exemplified in the preferred embodiment, and may be, for example, a video input terminal, an S terminal, a component input terminal, a D terminal, a PC input terminal, a LAN terminal, an IEEE 1394 terminal, and so on.

Further, although the television receiver 100 embodying the present invention is explained as one that can output the audio sound based on the PCM signal of which sampling frequency is 32 kHz, 44.1 kHz, or 48 kHz, the television receiver 100 may be one that can output the audio signal based on the PCM signal of which sampling signal is other than those as explained above.

Furthermore, the way of the display made by the execution of the signal-inputted/outputted terminal display control program 134d and the connected-device display control program 134e is not limited to one that is exemplified in the embodiment and the display may be made by character representation on a dedicated display (display unit) provided to the television receiver 100.

## Claims

1. A television receiver having an HDMI terminal and an RCA-type audio input terminal comprising:
a configuration unit for configuring input and output of an audio signal when the input from the HDMI terminal is selected;
a signal-inputted terminal detecting unit for detecting an audio input terminal to which the audio signal is inputted, when the input from the HDMI terminal is selected;
a connected-device detecting unit for detecting a category of a connected-device connected to the television receiver, based on the signal inputted through the HDMI terminal;
a signal-inputted/outputted terminal display control unit for making a display unit display in an OSD manner, information regarding to an audio input terminal to which an audio signal is inputted and an audio output terminal from which an audio signal is outputted, based on a detected result obtained by the signal-inputted terminal detecting unit and configuration of the input and the output of the audio signal configured by the configuration unit; and
a connected-device display control unit for making the display unit display in an OSD manner, information regarding to a connected-device connected to the television receiver through the HDMI terminal, based on a detected result obtained by the connected-device detecting unit.

2. A television receiver having an HDMI terminal and an RCA-type audio input terminal comprising:
a signal-inputted terminal detecting unit for detecting an audio input terminal to which the audio signal is inputted, when the input from the HDMI terminal is selected; and
a signal-inputted terminal display control unit for making a display unit display information regarding to an audio input terminal to which an audio signal is inputted, based on a detected result obtained by the signal-inputted terminal detecting unit.

3. A television receiver according to claim 2 further comprising:
a connected-device detecting unit for detecting a category of a connected-device connected to the television receiver, based on the signal inputted through the HDMI terminal; and
a connected-device display control unit for making the display unit display information regarding to a connected-device connected to the television receiver through the HDMI terminal, based on a detected result obtained by the connected-device detecting unit.

4. A television receiver according to claim 2 or 3, further comprising:
a configuration unit for configuring output of an audio signal when the input from the HDMI terminal is selected; and
a signal-outputted terminal display control unit for making a display unit display information regarding to an audio output terminal from which an audio signal is outputted, based on configuration of the output of the audio signal configured by the configuration unit.
